# FASCICULE DE BREVET EUROPEEN

(11) **EP 2 252 453 B1**
(45) Date de publication et mention de la délivrance du brevet: **18.12.2013**
(21) Numéro de dépôt: 09705028.0
(22) Date de dépôt: 16.01.2009
(51) Int. Cl.: B29C 70/54, B26F 1/24, B29K 101/12, B29K 105/08

(54) **PROCÉDÉ ET DISPOSITIF POUR RÉALISER UN PERÇAGE DANS UN MATÉRIAU COMPOSITE THERMOPLASTIQUE**
VERFAHREN UND VORRICHTUNG ZUM PERFORIEREN EINES THERMOPLASTISCHEN VERBUNDWERKSTOFFS
METHOD AND DEVICE FOR PERFORATING A THERMOPLASTIC COMPOSITE

(30) Priorité: 28.01.2008 FR 0850510
(43) Date de publication de la demande: 24.11.2010
(60) Demande divisionnaire: 13183297.4
(73) Titulaire: Hacoma, 46120 Lacapelle Marival (FR)
(72) Inventeur: HACHE, Grégory, F-46120 Molieres (FR); SAINT MARTIN, Christophe, F-46120 Saint-Bressou (FR)
(74) Mandataire: Fourcade, Emmanuelle
(86) Numéro de dépôt international: PCT/EP2009/050461
(87) Numéro de publication internationale: WO 2009/095314

(56) Documents cités:
- EP-A- 0 089 755
- FR-A- 2 763 881
- JP-A- 3 222 724
- US-A- 6 106 646

## Description

La présente invention appartient au domaine de la fabrication des pièces en matériaux composite.

Plus particulièrement l'invention concerne un procédé et un dispositif pour la réalisation de trous précis dans des matériaux composites comportant des fibres maintenues dans une résine ayant des propriétés thermoplastiques.

Le plus souvent pour des besoins d'assemblage mais non exclusivement, les pièces des structures comportent des trous servant à des passages de fixations. Ces trous doivent être réalisés avec des tolérances relativement serrées pour garantir la qualité des assemblages, en particulier lorsque les assemblages sont soumis à des efforts significatifs.

Dans les structures modernes il est fréquent que des pièces soient réalisées en matériau composite comportant des fibres minérales ou organiques, verre, carbone, Kevlar ® ... maintenues dans une résine organique.

La réalisation de trous dans de telles pièces composites est pratiquée soit lors de la fabrication de la pièce considérée en général au moyen d'un insert maintenu dans un moule utilisé pendant la réalisation de la pièce ou le plus souvent par perçage de la pièce réalisée, c'est à dire lorsque la résine organique maintenant les fibres est durcie.

Le document FR2763881 décrit également un autre procédé pour réaliser un trou dans une pièce formée essentiellement de fibres maintenues dans une matrice par introduction dans une partie préalablement chauffée de la pièce d'une aiguille comportant un fût cylindrique circulaire et une extrémité libre de forme conique.

La technique consistant à disposer un insert dans un moule lors de la réalisation de la pièce s'avère relativement complexe à mettre en oeuvre lorsque la pièce est elle-même de forme complexe et en outre il est difficile de garantir la position précise du trou, par exemple une précision inférieure au dixième de millimètre, en raison des risques de déformation de la pièce lorsque celle-ci est sortie du moule.

La technique du perçage permet de réaliser les trous dans la pièce à des emplacements précis en utilisant les techniques voisines des techniques conventionnelles utilisées pour la réalisation de trous dans des pièces en matériaux métalliques, sous réserve de mettre en oeuvre des outils de perçage et des paramètres de coupe adaptés aux matériaux composites généralement très abrasifs et qui, sans précautions, dégradent rapidement les caractéristiques des outils de coupe pendant les opérations de perçage qui s'avèrent longues et délicates à réaliser.

Outre la nécessité d'outils et de procédés adaptés, la technique du perçage présente l'inconvénient de couper les fibres, qui donnent sa résistance à la pièce, du matériau composite à l'emplacement du trou et exige des précautions pour limiter des risques de délaminage de la pièce en particulier du côté débouchant du trou.

Ces phénomènes ont pour conséquences de diminuer la résistance de la pièce et en pratique le concepteur augmente les épaisseurs de la pièce, au moins dans les zones comportant des trous, pour compenser la diminution de résistance.

Il en résulte une augmentation de la masse de la pièce préjudiciable dans de nombreuses applications où les matériaux composites sont mis en oeuvre.

La présente invention a précisément pour but une méthode selon la revendication independante 1 et un dispositif selon la revendication independante 8 pour la réalisation de perçages de précision dans des pièces en matériau composite sans endommagement des fibres au niveau du trou de perçage.

Pour éviter de déformer la pièce dans la direction de l'axe du trou pendant l'opération de perçage, la pièce 1 est avantageusement maintenue dans la zone du trou à réaliser par une plaque de contre-poussée pendant la réalisation du trou.

Pour maîtriser la sur-épaisseur de la pièce provoquée autour du trou par la matière repoussée de l'emplacement du trou, après la formation du trou à l'étape c) et avant le refroidissement de la pièce à l'étape d), de préférence une étape de calibration de l'épaisseur de la pièce dans une zone périphérique du trou est réalisée au cours de laquelle une pression est exercée entre la face supérieure et la face inférieure pour répartir la matière de la pièce repoussée de l'emplacement du trou vers la zone périphérique.

Lorsque qu'une forme particulière doit être donnée au trou telle qu'une fraisure au niveau du bord du trou ou un filet d'un taraudage, la forme particulière est avantageusement conformée par une empreinte d'une forme appliquée au cours de l'étape de calibration.

Dans un mode particulier de réalisation après la formation du trou à l'étape c) et avant le refroidissement de la pièce à l'étape d) et le cas échéant avant l'étape de calibration de la pièce est réalisée une étape d'insertion dans le trou réalisé d'un insert comportant un trou qui permet de solidariser efficacement en une seule étape avec l'opération de perçage l'insert et la pièce.

Le cas échéant le trou de l'insert, lorsque l'insert est lui-même réalisé dans un matériau thermoformable, est conformé par une empreinte d'une forme appliquée au cours de l'étape de calibration.

Lorsque l'opération de perçage est réalisée dans une phase de fabrication de la pièce au cours de laquelle la pièce est portée à une température égale ou supérieure à **Tf,** l'opération de perçage est avantageusement réalisée sans étape de chauffage supplémentaire.

Lorsqu'il est nécessaire d'élever la température de la pièce, le chauffage de la pièce à l'emplacement du trou est réalisé localement lors de l'opération de perçage par des moyens de chauffage par rayonnement ou par conduction de contact ou par ultrasons.

Pour la mise en oeuvre du procédé, l'invention concerne également un dispositif de perçage pour réaliser un trou dans la pièce en matériau composite thermoplastique qui comporte une aiguille comportant :
- i) du côté d'une extrémité libre de l'aiguille, une extrémité effilée d'une section sensiblement constante inférieure à la section du trou à réaliser dans la pièce et de longueur d'extrémité **Le ;**
- ii) du côté d'une autre extrémité, un talon d'une section sensiblement constante et égale à la section du trou à réaliser et d'une longueur de talon **Lt ;**
- iii) entre l'extrémité effilée et le talon une zone de section évolutive dans laquelle la section de l'aiguille évolue progressivement depuis la section de l'extrémité effilée vers la section du talon.

Pour obtenir un trou cylindrique dans la pièce, la longueur de talon **Lt** est égale ou supérieure à l'épaisseur de la pièce à l'emplacement du trou à réaliser.

Pour sa manipulation au cours des différentes opérations de perçage l'aiguille est solidaire au niveau du talon d'un corps, corps formant un épaulement par rapport au talon, ledit épaulement formant une surface d'appui sur une zone périphérique du trou lorsque l'aiguille est enfoncée dans la pièce pour former le trou.

Pour faciliter la pénétration de l'aiguille et l'écartement des fibres dans un mode de réalisation l'aiguille est vibrante, soumise à des vibrations de faible amplitude.

Pour réaliser des formes particulières tel qu'une fraisure ou un filetage au niveau du trou, le corps comporte une forme destinée à laisser une empreinte correspondant à la géométrie de ladite forme dans la pièce sur un ou des bords du trou ou dans le trou.

Afin de remplacer simplement l'aiguille qui peut être usée ou pour changer ses caractéristiques, le corps et l'aiguille sont séparables et assemblés par l'intermédiaire d'une extension cylindrique du corps ou de l'aiguille.

Dans ce cas lorsqu'il est souhaité poser un insert dans le trou réalisé, l'extension cylindrique comporte une zone intermédiaire d'une section inférieure à la section du talon, zone intermédiaire destinée à recevoir l'insert devant être fixé dans le trou réalisé dans la pièce, la section de la zone intermédiaire correspondant aux formes et dimensions d'un trou dans l'insert, la forme et les dimensions de la section du talon correspondant à des formes et dimensions d'une section extérieure de l'insert avant sa pose.

Dans une forme de réalisation avantageuse pour imposer des formes et des épaisseurs à l'insert et à la pièce dans la zone de l'insert et pour favoriser l'adhérence entre l'insert et la pièce, le corps et l'aiguille comportent en position assemblée au moins une première position écartée dans laquelle l'insert n'est pas déformé et une seconde position rapprochée dans laquelle l'insert est déformé lorsque l'insert peut être formé plastiquement à la température **Tf.**

Avantageusement l'aiguille est associée à des moyens de chauffage par rayonnement ou par conduction ou par ultrasons pour assurer le chauffage à la température de formage de la zone de la pièce dans laquelle le dispositif de perçage doit réaliser un trou.

Pour éviter que la pièce ne se trouve déformée par les efforts exercés par l'aiguille lors de sa pénétration dans la zone de la pièce à l'état plastique, de préférence le dispositif comporte une plaque de contre-poussée. La plaque de contre poussée est destinée à être placée sur la face inférieure de la pièce dans la zone du trou à réaliser. La plaque de contre-poussée comporte elle-même un trou de section au moins égal à la section du talon, l'axe dudit trou et l'axe de l'aiguille étant suffisamment rapprochés pour permettre à l'aiguille de réaliser le perçage dans la pièce sans être gêné par la plaque de contre-poussée.

La description détaillée d'un exemple de mise en oeuvre et de réalisation de l'invention faite en référence aux figures qui représentent :

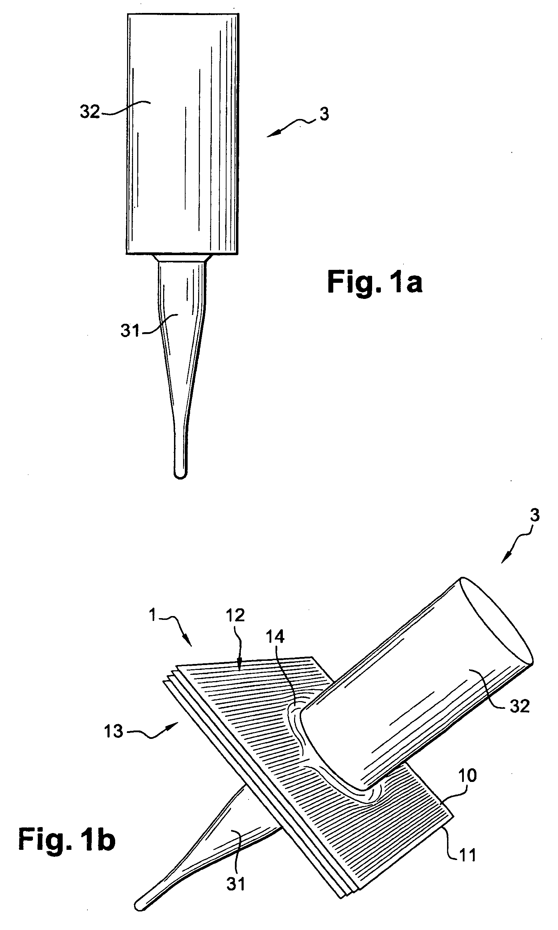

- Figures 1a et 1b :: un exemple d'outil de perçage suivant l'invention suivant un premier mode de réalisation, seul en vue de profil figure 1a et en perspective lors d'une opération de perçage d'une pièce figure 1b ;
- Figure 2 :: un exemple d'un second mode de réalisation d'un outil de perçage suivant l'invention comportant deux éléments désassemblés ;
- Figure 3a à figure 3 f :: une présentation schématique d'une opération de perçage avec pose d'un insert à l'aide d'un outil de perçage conforme à l'exemple de la figure 2 ;
- Figure 4 :: une vue en perspective d'une coupe d'une pièce obtenue après un perçage suivant le procédé de l'invention avec pose d'un insert ;
- Figure 5 :: une section illustrant l'application du procédé au cas d'une pièce réalisée avec une structure sandwich, une demi-section étant présentée avec l'outil en fin d'opération de perçage et l'autre demi-section étant présentée une fois l'outil dégagé.

L'invention a pour objet un procédé et un dispositif pour réaliser des trous de précision dans une pièce 1 en matériau composite comportant des fibres 10, en particulier mais non exclusivement des fibres longues, maintenues dans une matrice organique 11 dure présentant des propriétés thermoplastiques.

Par propriétés thermoplastiques d'une matrice organique on entend dans la présente description que le matériau formant la matrice du matériau composite est en mesure d'être amené dans un état relativement fluide, dit état plastique, par une élévation de la température à une valeur **Tf** dite température de formage, état dans lequel ladite matrice est déformable sans perdre des caractéristiques physico-chimiques et mécaniques attendues dans la pièce 1 lorsque ladite pièce est ramenée à une température inférieure à **Tf,** en particulier à une température **Tu** prévue d'utilisation de la pièce.

Des familles particulières de matériaux composites présentant de telles caractéristiques sont regroupées sous la désignation générale de « composites thermoplastiques » et comportent des matrices qui sont déformables lorsque la température est portée à une valeur suffisante, qui dépend du type de matériau organique, et retrouvent leurs propriétés mécaniques par durcissement lorsque la température est à nouveau abaissée à une température correspondant à une température de mise en oeuvre de la pièce. Ces composites thermoplastiques se présentent le plus souvent dans un état semi-ouvré sous la forme de plaques qui sont utilisées pour la réalisation de pièces par des techniques de formage à chaud, notamment de formage dans des moules.

Une pièce 1 en matériau composite comportant des fibres 10 maintenues dans une matrice 11 présentant des caractéristiques thermoplastiques comporte deux faces entre lesquelles doit être réalisé un trou débouchant :
- une première face, dite face supérieure 12, par laquelle le trou doit être réalisé ;
- une seconde face, dite face inférieure 13, par laquelle le trou doit déboucher.

Suivant le procédé de l'invention, pour réaliser le trou dans la pièce 1 en matériau composite thermoplastique :
- dans une première étape la pièce 1 est chauffée, localement au moins, à l'endroit du trou à réaliser pour amener la matrice 11 à la température **Tf** pour laquelle ladite matrice comporte des caractéristiques plastiques voulues ;
- dans une seconde étape les fibres 10 maintenues par la matrice 11 sont écartées à l'emplacement voulu pour le trou en repoussant radialement, par rapport à un axe longitudinal du trou, la matière devenue plastique de ladite matrice et en déformant lesdites fibres pour former un avant-trou, c'est à dire un trou d'une section sensiblement constante et inférieur au trou à réaliser ;
- dans une troisième étape la matière de la matrice 11 autour de l'avant-trou est amenée sensiblement à la température **Tf** et l'avant-trou est progressivement élargi en continuant à repousser essentiellement radialement la matière de la matrice 11 et à déformer les fibres 10 jusqu'à atteindre la section voulue pour le trou.
- Dans une quatrième étape la température de la pièce autour du trou est ramenée à une température **Tu** pour laquelle la matrice 11 ne présente pas de caractéristique plastique en même temps que la matière de la matrice et les fibres sont maintenues écartées pour ne pas refermer, même partiellement, le trou.

Dans le procédé les fibres 10 sont déformées autour du trou de sorte que les dites fibres ne soient pas coupées ou brisées, ou au moins pour que la quantité de fibres brisées soit la plus faible possible. Un tel résultat est obtenu lorsque la déformation est réalisée en repoussant radialement les fibres de manière progressive et en association à l'élévation locale de température qui a pour effet de rendre malléable la matrice 11.

Dans un premier mode de mise en oeuvre du procédé, la matière de la matrice est chauffée à proximité immédiate de la zone de la matrice devant être déformée au fur et à mesure de la déformation réalisée pour former le trou afin de limiter des déformations axiales des zones de la pièce 1 voisines du trou au cours de l'opération de perçage.

Dans un second mode de mise en oeuvre du procédé, la pièce 1 est chauffée sur une zone au moins égale à la zone devant être chauffée pour réaliser le trou avant de commencer les étapes de repoussage de la matrice et d'écartement des fibres. Dans ce mode, avantageusement la pièce est localement positionnée contre un support 33 placé sur la face inférieure 13 qui maintient la pièce 1 et évite à ladite pièce, localement dans un état plastique, d'être déformée suivant le sens axial pendant la réalisation du trou.

Dans une application particulière du procédé un insert 2, c'est à dire un élément rapporté ayant la forme d'un tore, est placé dans le trou réalisé, avant la quatrième étape du procédé, le matériau de la pièce et le matériau de l'insert étant solidarisés lorsque la matrice 11 est à la température **Tf** à laquelle ladite matrice est plastique par application d'une pression sur le matériau de la pièce et ou de l'insert, avant que la température ne soit abaissée.

Dans cette application, le trou est réalisé suivant le procédé dans le matériau thermoplastique de la pièce avec un diamètre sensiblement égal au diamètre de l'insert.

L'insert 2 permet de renforcer si besoin la pièce 1 dans la zone du trou et par un choix du matériau de l'insert de réaliser une isolation galvanique d'une fixation traversant le trou du matériau de la pièce. Par exemple un insert réalisé dans un matériau composite à base fibre de verre ou d'aramide permet d'isoler une fixation réalisée dans un alliage métallique sensible à une corrosion induite par le carbone d'une pièce réalisée dans un matériau composite à base de fibres de carbone.

Dans un mode préféré de mise en oeuvre du procédé, une zone périphérique 14 de la pièce 1 autour du trou en cours de réalisation est soumise, lorsque le trou est au diamètre souhaité, c'est à dire à l'issue de la troisième étape du procédé, et le cas échéant après la pose d'un insert 2, à une pression entre la face supérieure 12 et la face inférieure 13 de sorte que la matière initialement à l'emplacement du trou, et repoussée dans la zone périphérique 14 autour de laquelle elle forme une sur-épaisseur, soit répartie et que soit obtenue une épaisseur définie de la pièce 1 dans la zone périphérique 14.

Cette étape, dite étape de calibration de l'épaisseur, est réalisée avant la quatrième étape, c'est à dire lorsque le matériau de la matrice 11 dans la zone périphérique 14 a encore des propriétés plastiques en raison de sa température et permet d'obtenir une épaisseur parfaitement définie en gérant la répartition de la matière localement en excès du fait de la réalisation du trou qui est effectué sans enlèvement de matière.

Dans un mode particulier de mise en oeuvre de cette étape de calibration de l'épaisseur, la pression est exercée sur la pièce 1 dans la zone périphérique 14 afin de conformer la dite zone périphérique en fonction de l'utilisation qui doit être fait du trou.

Par exemple lorsque le trou doit recevoir une fixation à tête fraisée pour les besoins d'un assemblage, la zone périphérique est conformée pour reproduire au niveau du trou la fraisure adaptée à la fixation.

Le trou réalisé par le procédé est le plus souvent un trou circulaire défini par un diamètre, toutefois le procédé s'applique avantageusement à des trous de forme quelconque.

Dans un mode préféré de réalisation, afin de mettre en oeuvre le procédé de l'invention, un outil de perçage 3 comporte une aiguille 31 destinée à traverser la pièce 1 pour réaliser le trou.

On comprendra mieux la description de l'outil de perçage 3 et de ses éléments constitutifs en considérant que ledit outil de perçage est enfoncé dans la pièce 1, portée localement à la température **Tf,** à l'emplacement du trou à réaliser en application du procédé précédemment décrit pour réaliser un avant-trou et élargir ledit avant-trou pour obtenir le trou de la section voulue.

Dans un mode général de réalisation l'aiguille comporte une extrémité effilée 311, c'est à dire une extrémité d'une section relativement petite par rapport à la section du trou à réaliser dans la pièce, et comporte à l'opposée de l'extrémité effilée 311 suivant un axe 314 de l'aiguille un talon 312, c'est à dire une zone cylindrique, de longueur **Lt,** dont la section correspond à la section voulue pour le trou à réaliser.

Entre l'extrémité effilée 311 et le talon 312, l'aiguille comporte une zone de sections non constantes suivant l'axe 314, dite zone évolutive 313, de longueur Lv, dans laquelle la section de l'aiguille évolue de manière sensiblement continue entre la section de l'extrémité effilée 311 et la section du talon 312.

L'extrémité effilée 311 de l'aiguille comporte une extrémité libre 315 du côté de l'aiguille opposée au talon 312 dont la forme est de préférence une forme en pointe, c'est à dire que la dite extrémité correspond sensiblement à un cône terminal, ou bien une forme émoussée, c'est à dire que la dite extrémité correspond sensiblement à une forme terminale sphérique ou arrondie.

Le choix d'une forme particulière d'extrémité libre 315 est dicté par des considérations liées aux matériaux mis en oeuvre et ou au mode d'apport d'énergie de chauffage de la pièce et ou au nombre de perçage devant être réalisé avec une aiguille donnée.

La longueur **Lt** du talon correspond au moins à l'épaisseur de la pièce à l'emplacement du trou, en pratique au moins à la longueur du trou correspondant à une section constante.

Dans la plupart des cas, les trous réalisés sont circulaires et dans ces cas la section droite du talon est circulaire.

Cependant le procédé et l'outil de perçage s'appliquent à la réalisation de trous de sections non circulaires, par exemple des trous de formes allongées, pour répondre par exemple à des besoins de réglage ou de tolérance de montage, ou des trous de sections polygonales. Pour obtenir des trous de sections non circulaires, la section du talon 312 est réalisée avec la forme adaptée c'est à dire avec une section correspondant à la section du trou à réaliser.

L'extrémité effilée 311 comporte de préférence une section sensiblement constante, en dehors de l'extrémité libre 315, sur une longueur **Le** sensiblement égale à l'épaisseur de la pièce 1 dans la zone du trou afin de réaliser un avant-trou débouchant avant d'élargir ledit avant-trou à la section voulue du trou.

Même lorsque la section du trou, et donc la section du talon 312, n'est pas circulaire, il peut être préférable de réaliser un avant-trou circulaire pour mieux maîtriser le repoussage de la matière de la matrice 11 et l'écartement des fibres 10 lors du processus d'élargissement de l'avant-trou et dans ce cas la section de l'extrémité effilée 311 est a priori circulaire.

Les lois de variation des sections de l'aiguille 31 dans la zone évolutive 313 entre la section de l'extrémité effilée 311 et celle du talon 312 déterminent en pratique la manière dont la matière de la matrice 11 est repoussée lorsque l'aiguille est enfoncée et donc permettent dans une certaine mesure de contrôler le volume de matière repoussé dans les différentes directions autour d'un axe du trou.

L'outil de perçage 3 comporte également un corps 32 dont la forme n'est pas imposée par le procédé sauf au niveau d'un raccordement avec l'aiguille 31.

Le corps 32 est solidaire de l'aiguille 31 au niveau du talon 312 de l'aiguille et du côté de l'aiguille opposé à l'extrémité effilée 311.

Le corps 32 permet de tenir l'aiguille 31 pendant les opérations de perçage de la pièce 1 c'est à dire qu'il permet d'orienter, de guider et d'appliquer les efforts nécessaires à l'aiguille pour réaliser le trou par enfoncement de l'aiguille soit à l'aide d'un outil support manuel soit par une machine automatisée tel qu'un robot porteur d'outil ou telle qu'une machine multi-axes à commande numérique.

Lorsque l'aiguille 31, pour les besoins de la mise en oeuvre du procédé, est utilisée pour apporter de l'énergie à la pièce 1 afin de chauffer localement la matière de la matrice 11, le corps 32 comporte avantageusement des moyens pour apporter à l'aiguille les quantités de chaleur nécessaires.

Le corps 32 a de préférence une partie 321 sensiblement cylindrique au niveau du raccordement avec le talon 312 de l'aiguille 31. Avantageusement le corps présente par rapport au talon 312 un épaulement 322.

L'épaulement 322 vient en appui sur la pièce 1 lorsque l'aiguille 31 est totalement enfoncée dans la pièce 1, c'est à dire lorsque le trou dans ladite pièce a atteint la section voulue, et la largeur dudit épaulement est choisi pour recouvrir la zone périphérique 14 dans laquelle la matière de la pièce 1 repoussée lors de la formation du trou par l'aiguille 31 doit être répartie lors d'une calibration de l'épaisseur de la pièce 1 dans ladite zone périphérique.

Dans une forme préférée de réalisation, l'outil de perçage comporte également une plaque de contre-poussée 6 venant en appui sur la face inférieure 13 de la pièce 1.

Ladite plaque de contre-poussée peut prendre de nombreuses formes, en particulier en raison de la forme de la pièce 1 dans la zone où est réalisé une opération de perçage, mais comporte elle-même un trou 61 dont la section correspond sensiblement à la section du trou à réaliser et donc de l'aiguille 31 dans la zone du talon 312 de sorte à laisser passer l'aiguille 31 pendant les opérations de perçage.

La plaque de contre-poussée 6 et l'aiguille 31 sont agencées de sorte que l'axe 314 de l'aiguille et un axe 62 du trou 61 de la plaque de contre-poussée sont proches ou sensiblement confondus et que l'aiguille 31 est mobile suivant l'axe 314, 62 par rapport à ladite plaque de contre-poussée.

Dans une forme particulière de réalisation, le corps et ou la plaque de contre-poussée comportent des formes 323, 63 représentatives d'empreintes, par exemple des formes tronc-coniques de fraisures, devant être réalisées sur un ou les bords du trou à réaliser.

Dans une forme préférée de réalisation de l'outil de perçage 3, l'aiguille 31 est séparable du corps 32 afin de pouvoir être aisément remplacée soit en raison d'une usure de l'aiguille soit pour utiliser une aiguille ayant des caractéristiques différentes, par exemple un diamètre du talon 312.

Dans un mode particulier de réalisation de l'outil de perçage 3, ledit outil comporte des moyens de vibration qui permette de faire vibrer au moins l'aiguille 31 avec une faible amplitude ce qui a pour effet de faciliter la progression de l'aiguille lors de la réalisation du perçage tout en facilitant le ré-arrangement des fibres 10, en particulier dans le cas des fibres longues, autour du trou au sein de la matrice 11.

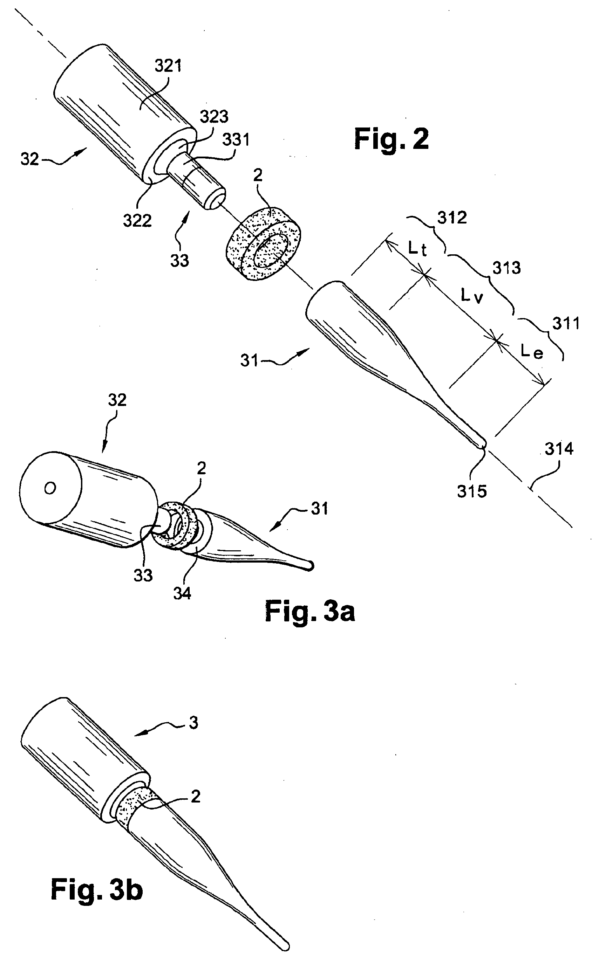

Dans un mode de réalisation adapté à la réalisation d'un perçage avec la mise en place d'un insert 2 dans le trou réalisé, l'aiguille 31 et le corps 32 sont assemblés, comme illustré sur les figures 2, 3a et 3b, de sorte qu'une zone intermédiaire 331 entre le talon 312 et l'épaulement 322 présente une section réduite par rapport à la section du talon sur une longueur au moins égale à l'épaisseur de la pièce 1 dans la zone du trou à réaliser.

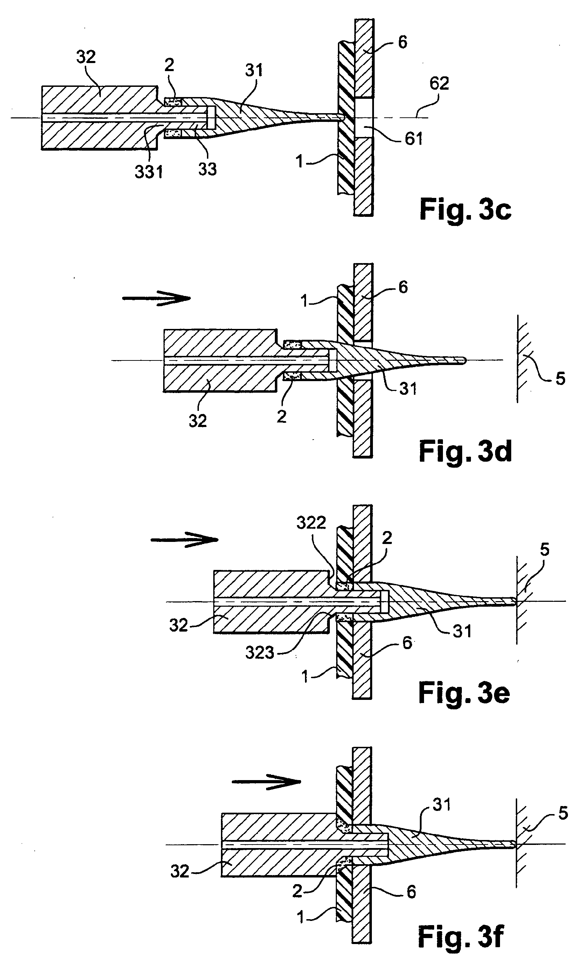

La section de la zone intermédiaire 331 est déterminée par une section recherchée du trou à l'intérieur de l'insert 2 et dans ce cas la section du talon 312 correspond sensiblement à la section extérieure de l'insert pour la pose duquel le trou est réalisé dans la pièce comme illustré sur les figures 3.

Un insert peut être réalisé avec différentes technologies, en particulier en fonction du type de pièces dans lequel il est incorporé et du type d'utilisation de la pièce.

L'insert est par exemple de manière connue un insert rigide, réalisé dans un matériau métallique ou dans un autre matériau, avec une forme et des dimensions établies qui ne sont pas modifiées lorsque l'insert est posé au moyen de l'outil de perçage.

Dans une autre forme de mise en oeuvre, l'insert est réalisé dans un matériau comportant une matrice thermoplastique ou thermodurcissable, par exemple une forme tissée, avantageusement suivant trois directions, en forme de tore, comme illustré sur la figure 2, et imprégnée d'une résine thermoplastique ou thermodurcissable.

Dans ce cas les caractéristiques de la matrice thermoplastique de l'insert vis à vis de températures permettant de former l'insert sont choisies de sorte que l'insert puisse être formé aux températures effectivement mises en oeuvre pendant l'opération de perçage.

De même les caractéristiques de la matrice thermodurcissable de l'insert, le cas échéant, sont choisies pour que le matériau de ladite matrice soit compatible d'un formage aux températures effectivement mises en oeuvre pendant l'opération de perçage et d'une opération de cuisson simultanée ou ultérieure ayant pour effet de rendre définitivement dur l'insert.

Dans cette forme de mise en oeuvre pour la pose d'un insert 2 thermoplastique ou thermodurcissables, avantageusement l'aiguille 31 et le talon 32 comportent au moins deux positions assemblées, une première position dite position écartée dans laquelle un insert 2 placé sur la zone intermédiaire 331 est maintenu sans être déformé, et une seconde position dite position rapprochée dans laquelle l'insert placé sur la zone intermédiaire 331 est soumis à une pression entre l'épaulement 322 et le talon 312 qui a pour effet d'obtenir une épaisseur calibrée, correspondant à une longueur du trou, de l'insert et le cas échéant de conformer l'insert par exemple par la reproduction en creux d'une forme 323 du corps ou de l'aiguille, par exemple pour former un chanfrein au bord du trou.

La pression exercée sur la pièce 1 dans la zone périphérique 14 et sur l'insert 2 lorsque le talon et l'aiguille sont rapprochés a pour effet non seulement de calibrer l'épaisseur de la pièce et de l'insert dans la zone du trou mais également de solidariser les matériaux de ladite pièce et du dit insert en raison d'une pression locale générée au niveau de l'interface entre la pièce et l'insert au cours de l'opération de calibration.

Avantageusement une extension cylindrique 33 du corps 32 coopère avec un trou 34 de section équivalente de l'aiguille 31, ou inversement une extension cylindrique de l'aiguille coopère avec un trou de section équivalente du corps (solution non représentée), pour permettre de séparer l'aiguille du corps afin dans un premier temps de mettre en place un insert 2 sur la zone intermédiaire 331, comme illustré sur les figures 3a et 3b, et dans un deuxième temps après l'opération de perçage de retirer l'outil 3 qui enserre, comme illustré sur la figure 3f, l'insert 2 après la pose dudit insert.

L'extension cylindrique 33 permet également, lorsque nécessaire un déplacement relatif du corps et de l'aiguille entre les positions écartée et rapprochée au cours d'une séquence de perçage avec pose d'un insert thermoplastique ou thermodurcissable.

Le déplacement contrôlé de l'aiguille 31 par rapport au corps 32 est réalisé par tout moyen mécanique ou autre permettant de contrôler ce déplacement.

Avantageusement l'aiguille 31 est solidaire d'une tige qui pénètre dans le corps 32 et des moyens d'actionnement, non représentés, agissent sur la tige pour modifier la position relative de l'aiguille et du corps.

Dans une autre forme de réalisation, l'extension cylindrique 33 forme un piston d'un vérin dont une chambre formée par ladite extension et l'aiguille 31, ou le corps 32, est utilisée pour contrôler la position relative du corps et de l'aiguille.

Dans une autre forme de réalisation, l'extension cylindrique 33 est de section circulaire et comporte un filetage, solution non représentée, sur une partie de sa longueur qui permet de contrôler la position relative du corps 32 et de l'aiguille 31 par une rotation entre ces deux éléments.

Dans une autre forme de réalisation des moyens extérieurs à l'aiguille et au corps sont utilisés.

Par exemple comme illustré sur les figures 3c et 3d une butée arrière 5 limite la progression de l'aiguille 31 en fin d'opération de perçage de sorte qu'une force exercée sur le corps 32 provoque le déplacement relatif recherché entre ledit corps et la dite aiguille.

Dans une forme particulière de réalisation d'un outil de perçage avec pose d'un insert formé au cours de l'opération de perçage, l'extension cylindrique 331 comporte un filetage, non représenté, dans la zone de l'insert 2 de sorte que ledit filetage soit imprimé dans l'insert 2 réalisé dans un matériau thermoplastique ou un matériau thermodurcissable lors de la pose dudit insert de sorte à former un trou taraudé.

Dans ce cas la partie de l'outil 3 comportant l'extension 331 est retirée après l'opération de perçage par dévissage.

Cet exemple illustre que, avec ou sans insert, des trous de formes différentes, autres que de sections circulaires et également autres que cylindriques, sont possibles par la mise en oeuvre du procédé moyennant l'utilisation d'un outil de forme adaptée, sous la seule réserve que la forme du trou permette de retirer l'outil en une partie ou en deux ou plusieurs parties.

Les figures 3a à 3f illustrent une séquence de réalisation d'un trou dans la pièce 1 avec pose d'un insert 2.

Dans un premier temps le corps 32 et l'aiguille 31 sont séparés et l'insert 2 est placé sur la zone intermédiaire 331 de l'extension 33 (figure 3a).

Le corps 32 et l'aiguille 31 sont alors assemblés pour former l'outil de perçage 3 porteur de l'insert 2 (figure 3b).

L'outil est alors mis en oeuvre suivant le procédé pour réaliser un trou dans la pièce 1, par exemple maintenue par une plaque de contre-poussée 6, correspondant à la section du talon 312 de l'aiguille en enfonçant l'aiguille 31 dans la pièce 1, localement à la température de formage **Tf** (figures 3c, 3d et 3e). La section du talon 312 correspond également sensiblement à la section de l'insert 2 de sorte que lorsque ledit talon de l'aiguille a traversé la pièce 1, l'insert se trouve occuper le trou réalisé par l'aiguille (figure 3e).

Le corps 32 est alors rapproché de l'aiguille 31, par exemple en arrêtant la progression de l'aiguille au moyen d'une butée 5, pour calibrer l'épaisseur de la zone périphérique du trou entre l'épaulement 322 du corps et la plaque de contre-poussée 6 et pour conformer le trou de l'insert en fonction de la forme 323 de l'épaulement 322 (figure 3f).

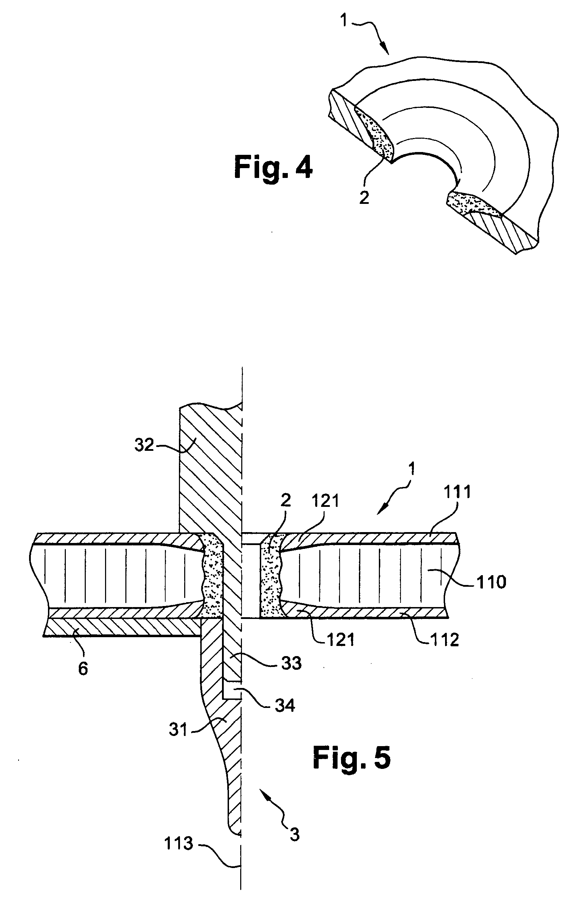

Dans une dernière étape non représentée lorsque la température est descendue en dessous d'une valeur au-dessus de laquelle la stabilité dimensionnelle de la matière de la matrice du matériau de la pièce et de l'insert ne serait pas garantie, l'aiguille 31 et le corps 32 sont séparés pour libérer la pièce 1 comportant le trou avec un insert comme illustré en coupe sur la figure 4.

Le procédé trouve également application dans le cas de pièces 1 en composite dites sandwich comportant, comme illustré sur la figure 5, une âme 110 constituée d'un matériau à faible densité, par exemple une mousse ou un matériau alvéolaire tel qu'un matériau en nid d'abeille, compris entre deux panneaux 111, 112 en matériau composite comportant des fibres dans une résine thermoplastique. Dans ce cas la pose d'un insert 2 s'avère particulièrement utile pour améliorer la résistance à l'écrasement dans la zone du trou et un trou est avantageusement réalisé suivant le procédé et avec un outil de perçage tels que décrits.

Dans le cas d'un tel perçage d'un matériau sandwich le procédé, comme illustré sur la demi-section gauche de la figure 5, est appliqué pour réaliser le perçage des deux panneaux 111, 112 successivement suivant un axe commun 113 avec un outil 3 dont la longueur de la zone intermédiaire 311 est adaptée pour y placer un insert 2 dont la longueur correspond à l'épaisseur du panneau sandwich.

Dans ce cas particulier, il est avantageux que la matière excédentaire 121, 122 repoussée vers les bords du trou dans chaque panneau 111, 112 soit, dans la zone périphérique 14 de chaque panneau, repoussée lors de l'étape de calibrage entre l'épaulement 322 du corps 32 et la plaque de contre-poussée 6 du côté d'une face du panneau située du côté de l'âme 110 soit par déformation de la mousse soit par fluage dans les alvéoles, de sorte que la pièce ne comporte pas de déformation sur ses faces extérieures dans la zone du trou comme illustré sur la section de la figure 5, en particulier la demi-section droite de la figure qui présente la pièce réalisée lorsque l'outil de perçage est retiré.

Pour élever la température de la matrice jusqu'à la température **Tf** de thermoformage, différentes méthodes sont avantageusement mises en oeuvre suivant le processus de fabrication de la pièce 1 et le moment où des trous doivent être réalisés.

Une méthode consiste à réaliser le perçage suivant le procédé décrit lorsque la pièce 1 est encore à une température suffisante, supérieure ou égale à la température **Tf,** à l'issue d'un processus de formage dans un moule au cours duquel la température a été augmentée.

Dans ce cas avantageusement le moule, ou une de ses parties, est utilisé comme plaque de contre-poussée 33 et comporte des trous 331 pouvant être dégagés pour le passage de l'aiguille 31 aux emplacements nécessaires.

Une autre méthode consiste à réchauffer localement la matière par des moyens externes à l'emplacement où un trou doit être réalisé, par exemple au moyen d'un four rayonnant localement de la chaleur, avant de réaliser le perçage en continuant à chauffer localement la pièce 1 si besoin.

Une autre méthode consiste à apporter la chaleur nécessaire à l'élévation de température de la matrice de la pièce 1 au moyen d'une aiguille 31 chauffante.

Dans ce cas l'aiguille 31 est réalisée dans un matériau bon conducteur de la chaleur. Avantageusement l'aiguille 31 est alors chauffée par conduction à partir du corps 32 lui-même porté à une température adaptée pour amener la matière de la matrice à une température au moins égale à la température **Tf.**

Une autre méthode consiste à apporter de l'énergie à la pièce 1 par ultrason au moyen de l'aiguille 31 lorsque le matériau composite de la pièce se prête à un tel mode de chauffage.

Lorsque l'énergie pour chauffer la matrice est apportée par l'aiguille de préférence l'extrémité libre 315 de l'aiguille est conformée pour répondre au mieux à ce besoin et a donc une forme sphérique ou arrondie pour améliorer la surface de contact en particulier au début du processus de perçage.

L'invention permet donc de réaliser des trous dans des pièces en matériau composite dont la matrice dispose de caractéristiques thermoformables sans outils coupant et sans couper les fibres du matériau.

L'invention permet également de poser un insert au cours de l'opération même de perçage.

## Revendications

1. Procédé pour réaliser un trou dans une pièce (1) formée essentiellement de fibres (10) maintenues dans une matrice (11), ladite pièce comportant dans la zone du trou à réaliser une première face, dite face supérieure (12), par laquelle le trou est réalisé et une seconde face, dite face inférieure (13), par laquelle le trou débouche, ladite matrice consistant essentiellement en un matériau, dit matériau thermoplastique, présentant un état plastique lorsqu'il est porté à une température **Tf,** dite température de formage, et présentant un état non plastique lorsque qu'il est à une température **Tu,** dite température d'utilisation, inférieure à **Tf, caractérisé en ce qu'**il comporte les étapes de :
- a) chauffer localement au moins à l'endroit du trou à réaliser la matrice (11) de la pièce (1) à la température **Tf ;**
- b) écarter les fibres (10) maintenues par la matrice (11) à l'emplacement voulu pour le trou en repoussant radialement par rapport à un axe longitudinal du trou la matière à l'état plastique de ladite matrice pour former un avant-trou d'une section sensiblement constante et inférieure à une section voulue pour le trou ;
- c) chauffer si besoin la matière de la matrice (11) autour de l'avant-trou à la température **Tf** et progressivement écarter les fibres (10) et repousser la matière à l'état plastique de la matrice (11) jusqu'à atteindre la section sensiblement constante voulue pour le trou entre la face supérieure (12) et la face inférieure (13) ;
- d) refroidir la matière de la matrice (11) à une température **Tu,** ou au moins à une température inférieure à **Tf** pour laquelle ladite matrice n'a plus de propriété thermoplastique, en maintenant la matière de la matrice (11) repoussée et les fibres (10) écartées autour du trou réalisé au cours des étapes précédentes.

2. Procédé suivant la revendication 1 dans lequel la pièce 1 est maintenue dans la zone du trou à réaliser par une plaque de contre-poussée (6) pendant la réalisation du trou.

3. Procédé suivant la revendication 1 ou la revendication 2 comportant après la formation du trou à l'étape c) et avant le refroidissement de la pièce (1) à l'étape d) une étape de calibration de l'épaisseur de ladite pièce dans une zone (14) périphérique du trou au cours de laquelle une pression est exercée entre la face supérieure (12) et la face inférieure (13) pour répartir la matière de la pièce (1) repoussée de l'emplacement du trou vers ladite zone périphérique.

4. Procédé suivant la revendication 3 dans lequel le trou est conformé par une empreinte d'une forme appliquée au cours de l'étape de calibration.

5. Procédé suivant l'une des revendications précédentes comportant après la formation du trou à l'étape c) et avant le refroidissement de la pièce (1) à l'étape d) et le cas échéant avant l'étape de calibration de la dite pièce une étape d'insertion dans le trou réalisé d'un insert (2) comportant un trou.

6. Procédé suivant l'une des revendications précédentes dans lequel le chauffage de la pièce à l'emplacement du trou à réaliser est réalisé lors d'une étape de formage de la pièce (1) indépendante de l'opération de perçage.

7. Procédé suivant l'une des revendications 1 à 5 dans lequel le chauffage de la pièce (1) à l'emplacement du trou à réaliser est réalisé localement lors de l'opération de perçage par des moyens de chauffage par rayonnement ou par conduction de contact ou par ultrasons.

8. Dispositif de perçage pour réaliser un trou dans une pièce (1) formée essentiellement de fibres (10) maintenues dans une matrice (11), ladite pièce comportant dans la zone du trou à réaliser une première face, dite face supérieure (12), par laquelle le trou est réalisé et une seconde face, dite face inférieure (13), par laquelle le trou débouche, ladite matrice consistant essentiellement en un matériau, dit matériau thermoplastique, présentant un état plastique lorsqu'il est porté à une température **Tf,** dite température de formage, et présentant un état non plastique lorsque qu'il est à une température **Tu,** dite température d'utilisation, inférieure à **Tf, caractérisé en ce qu'**il comporte une aiguille comportant :
- i) du côté d'une extrémité libre (315) de l'aiguille (31), une extrémité effilée (311) d'une section sensiblement constante inférieure à la section du trou à réaliser dans la pièce (1) et de longueur d'extrémité **Le ;**
- ii) du côté d'une autre extrémité, un talon (312) d'une section sensiblement constante et égale à la section du trou à réaliser et d'une longueur de talon **Lt ;**
- iii) entre l'extrémité effilée (311) et le talon (312) une zone (313) de section évolutive dans laquelle la section de l'aiguille (31) évolue progressivement depuis la section de l'extrémité effilée vers la section du talon.

9. Dispositif de perçage suivant la revendication 8 dans lequel la longueur de talon **Lt** est égale ou supérieure à une épaisseur de la pièce (1) à l'emplacement du trou à réaliser.

10. Dispositif de perçage suivant la revendication 8 ou la revendication 9 dans lequel l'aiguille (31) est solidaire au niveau du talon (312) d'un corps (32), ledit corps formant un épaulement (322) par rapport au dit talon, ledit épaulement formant une surface d'appui sur une zone périphérique (14) du trou lorsque l'aiguille est enfoncée dans la pièce (1) pour former ledit trou.

11. Dispositif de perçage suivant la revendication 10 dans lequel le corps comporte une forme (323) destinée à laisser une empreinte correspondant à la géométrie de ladite forme dans la pièce (1) sur un ou des bords du trou ou dans le trou réalisé par ledit dispositif.

12. Dispositif de perçage suivant la revendication 10 ou la revendication 11 dans lequel le corps (32) et l'aiguille (31) sont séparables et assemblés par l'intermédiaire d'une extension cylindrique (33) du dit corps ou de ladite aiguille.

13. Dispositif de perçage suivant la revendication 12 dans lequel l'extension cylindrique (33) comporte une zone intermédiaire (331) d'une section inférieure à la section du talon (312), la dite zone intermédiaire étant destinée à recevoir un insert (2) devant être fixé dans le trou réalisé dans la pièce (1) par le dispositif de perçage, la section de la dite zone intermédiaire correspondant aux formes et dimensions d'un trou dans l'insert (2), la forme et les dimensions de la section dudit talon correspondant à des formes et dimensions d'une section extérieure du dit insert avant la pose du dit insert.

14. Dispositif de perçage suivant la revendication 12 ou la revendication 13 dans lequel le corps (32) et l'aiguille (31) comporte en position assemblée au moins une première position écartée dans laquelle l'insert (2) n'est pas déformé et une seconde position rapprochée dans laquelle l'insert (2) est déformé lorsque ledit insert peut être formé plastiquement à la température Tf.

15. Dispositif suivant l'une des revendications 8 à 14 dans lequel l'aiguille (31) est associée à des moyens de chauffage par rayonnement ou par conduction ou par ultrasons d'une zone de la pièce (1) dans laquelle ledit dispositif doit réaliser un trou.

## Patentansprüche

1. Verfahren zur Herstellung eines Lochs in einem hauptsächlich von in einer Matrix (11) gehaltenen Fasern (10) geformten Bauteil (1), wobei das Bauteil in der Zone des herzustellenden Lochs eine Oberseite (12) genannte erste Seite, durch die das Loch hergestellt wird, und eine Unterseite (13) genannte zweite Seite aufweist, durch die das Loch mündet, wobei die Matrix hauptsächlich aus einem thermoplastisches Material genannten Material besteht, das einen plastischen Zustand, wenn es auf eine Formungstemperatur genannte Temperatur Tf gebracht wird, und einen nicht plastischen Zustand hat, wenn es auf einer Nutztemperatur genannten Temperatur Tu niedriger als Tf ist, **dadurch gekennzeichnet, dass** es die folgenden Schritte aufweist:
a) lokales Erwärmen auf die Temperatur Tf mindestens an der Stelle des herzustellenden Lochs der Matrix (11) des Bauteils (1);
b) Entfernen der von der Matrix (11) gehaltenen Fasern (10) an der für das Loch gewünschten Stelle durch radiales Zurückschieben des im plastischen Zustand befindlichen Materials der Matrix bezüglich einer Längsachse des Lochs, um ein Vorloch mit einem im Wesentlichen konstanten und kleineren Querschnitt als ein gewünschter Querschnitt für das Loch zu formen;
c) Erwärmen, falls nötig, des Materials der Matrix (11) um das Vorloch herum auf die Temperatur Tf und progressives Entfernen der Fasern (10) und Zurückschieben des im plastischen Zustand befindlichen Materials der Matrix (11), bis der für das Loch gewünschte, im Wesentlichen konstante Querschnitt zwischen der Oberseite (12) und der Unterseite (13) erreicht ist;
d) Abkühlen des Materials der Matrix (11) auf eine Temperatur Tu oder mindestens auf eine niedrigere Temperatur als Tf, bei der die Matrix keine thermoelastische Eigenschaft mehr hat, indem das Material der Matrix (11) zurückgeschoben und die Fasern (10) um das im Laufe der vorhergehenden Schritte hergestellte Loch entfernt gehalten werden.

2. Verfahren nach Anspruch 1, wobei das Bauteil (1) während der Herstellung des Lochs durch eine Gegendruckplatte (6) in der Zone des herzustellenden Lochs gehalten wird.

3. Verfahren nach Anspruch 1 oder Anspruch 2, das nach dem Formen des Lochs im Schritt c) und vor dem Abkühlen des Bauteils (1) im Schritt d) einen Schritt der Kalibrierung der Dicke des Bauteils in einer Umfangszone (14) des Lochs aufweist, während dessen ein Druck zwischen der Oberseite (12) und der Unterseite (13) ausgeübt wird, um das von der Stelle des Lochs zurückgeschobene Material des Bauteils (1) zur Umfangszone zu verteilen.

4. Verfahren nach Anspruch 3, wobei das Loch durch eine Vertiefung einer Form angepasst wird, die während des Kalibrierungsschritts angewendet wird.

5. Verfahren nach einem der vorhergehenden Ansprüche, das nach dem Formen des Lochs im Schritt c) und vor dem Abkühlen des Bauteils (1) im Schritt d) und ggf. vor dem Kalibrierungsschritt des Bauteils einen Schritt des Einfügens eines ein Loch aufweisenden Einsatzes (2) in das hergestellte Loch aufweist.

6. Verfahren nach einem der vorhergehenden Ansprüche, wobei das Erwärmen des Bauteils an der Stelle des herzustellenden Lochs in einem Schritt der Formung des Bauteils (1) durchgeführt wird, der vom Bohrdurchgang unabhängig ist.

7. Verfahren nach einem der Ansprüche 1 bis 5, wobei das Erwärmen des Bauteils (1) an der Stelle des herzustellenden Lochs lokal beim Bohrvorgang durch Einrichtungen zum Erwärmen durch Strahlung oder durch Kontaktleitung oder durch Ultraschall durchgeführt wird.

8. Bohrvorrichtung zur Herstellung eines Lochs in einem hauptsächlich von in einer Matrix (11) gehaltenen Fasern (10) geformten Bauteil (1), wobei das Bauteil in der Zone des herzustellenden Lochs eine Oberseite (12) genannte erste Seite, durch die das Loch hergestellt wird, und eine Unterseite (13) genannte zweite Seite aufweist, durch die das Loch mündet, wobei die Matrix hauptsächlich aus einem thermoplastisches Material genannten Material besteht, das einen plastischen Zustand, wenn es auf eine Formungstemperatur genannte Temperatur Tf gebracht wird, und einen nicht plastischen Zustand hat, wenn es auf einer Nutztemperatur genannten Temperatur Tu niedriger als Tf ist, **dadurch gekennzeichnet, dass** es eine Nadel aufweist, die aufweist:
i) auf der Seite eines freien Endes (315) der Nadel (31), ein dünnes Ende (311) mit einem im Wesentlichen konstanten Querschnitt geringer als der Querschnitt des im Bauteil (1) herzustellenden Lochs und mit einer Endlänge Le;
ii) auf der Seite eines anderen Endes, einen Schaft (312) mit einem im Wesentlichen konstanten Querschnitt gleich dem Querschnitt des herzustellenden Lochs und mit einer Schaftlänge Lt;
iii) zwischen dem dünnen Ende (311) und dem Schaft (312) eine Zone (313) mit einem sich ausweitenden Querschnitt, in der der Querschnitt der Nadel (31) sich progressiv vom Querschnitt des dünnen Endes zum Querschnitt des Schaftes ausweitet.

9. Bohrvorrichtung nach Anspruch 8, wobei die Schaftlänge Lt gleich der oder größer als eine Dicke des Bauteils (1) an der Stelle des herzustellenden Lochs ist.

10. Bohrvorrichtung nach Anspruch 8 oder Anspruch 9, wobei die Nadel (31) im Bereich des Schafts (312) fest mit einem Körper (32) verbunden ist, wobei der Körper eine Schulter (322) bezüglich des Schafts formt, wobei die Schulter eine Auflagefläche auf einer Umfangszone (14) des Lochs formt, wenn die Nadel in das Bauteil (1) eingedrückt wird, um das Loch zu formen.

11. Bohrvorrichtung nach Anspruch 10, wobei der Körper eine Form (323) aufweist, die dazu bestimmt ist, eine der Geometrie der Form entsprechende Vertiefung im Bauteil (1) auf einem Rand oder Rändern des Lochs oder im durch die Vorrichtung hergestellten Loch zurückzulassen.

12. Bohrvorrichtung nach Anspruch 10 oder Anspruch 11, wobei der Körper (32) und die Nadel (31) trennbar sind und mittels einer zylindrischen Verlängerung (33) des Körpers oder der Nadel zusammengebaut werden.

13. Bohrvorrichtung nach Anspruch 12, wobei die zylindrische Verlängerung (33) eine Zwischenzone (331) mit einem geringeren Querschnitt als der Querschnitt des Schafts (312) aufweist, wobei die Zwischenzone dazu bestimmt ist, einen Einsatz (2) aufzunehmen, der in dem im Bauteil (1) durch die Bohrvorrichtung hergestellten Loch befestigt werden soll, wobei der Querschnitt der Zwischenzone den Formen und Abmessungen eines Lochs im Einsatz (2) entspricht, wobei die Form und die Abmessungen des Querschnitts des Schafts Formen und Abmessungen eines äußeren Querschnitts des Einsatzes vor dem Einsetzen des Schafts entsprechen.

14. Bohrvorrichtung nach Anspruch 12 oder Anspruch 13, wobei der Körper (32) und die Nadel (31) in zusammengebauter Stellung mindestens eine erste entfernte Stellung, in der der Einsatz (2) nicht verformt ist, und eine zweite angenäherte Stellung aufweisen, in der der Einsatz (2) verformt wird, wenn der Einsatz plastisch bei der Temperatur Tf geformt werden kann.

15. Bohrvorrichtung nach einem der Ansprüche 8 bis 14, wobei die Nadel (31) Einrichtungen zur Erwärmung einer Zone des Bauteils (1) durch Strahlung oder durch konduktive Erwärmung oder durch Ultraschall zugeordnet ist, wobei die Vorrichtung ein Loch herstellen soll.

## Claims

1. Method for producing a hole in a part (1) formed substantially of fibres (10) held in a matrix (11), said part comprising, in the region of the hole to be produced, a first face, known as the upper face (12), through which the hole is produced, and a second face, known as the lower face (13), through which the hole emerges, said matrix consisting substantially of a material, known as a thermoplastic material, having a plastic state when it is brought to a temperature **Tf,** known as the forming temperature, and having a non-plastic state when it is at a temperature **Tu,** known as the use temperature, which is less than **Tf, characterized in that** it comprises the steps of:
- a) locally heating the matrix (11) of the part (1) to the temperature **Tf,** at least at the location of the hole to be produced;
- b) spacing apart the fibres (10) held by the matrix (11) at the desired position for the hole by radially pushing back, with respect to a longitudinal axis of the hole, the material in the plastic state of said matrix in order to form a pilot hole having a substantially constant cross section smaller than a desired cross section for the hole;
- c) if necessary, heating the material of the matrix (11) around the pilot hole to the temperature **Tf** and progressively spacing apart the fibres (10) and pushing back the material in the plastic state of the matrix (11) until reaching the substantially constant cross section desired for the hole between the upper face (12) and the lower face (13);
- d) cooling the material of the matrix (11) to a temperature **Tu,** or at least to a temperature less than **Tf** at which said matrix no longer has a thermoplastic property, keeping the material of the matrix (11) pushed back and the fibres (10) spaced apart around the hole produced during the preceding steps.

2. Method according to Claim 1, in which the part (1) is held in the region of the hole to be produced by a counter-bearing plate (6) during the production of the hole.

3. Method according to Claim 1 or Claim 2, comprising, following the formation of the hole in step c) and before the cooling of the part (1) in step d), a step of calibrating the thickness of said part in a peripheral region (14) of the hole, during which a pressure is exerted between the upper face (12) and the lower face (13) in order to spread the material of the part (1) pushed back from the position of the hole towards said peripheral region.

4. Method according to Claim 3, in which the hole is shaped by an indentation of a shape applied during the calibration step.

5. Method according to one of the preceding claims, comprising, following the formation of the hole in step c) and before the cooling of the part (1) in step d) and, if necessary, before the step of calibrating said part, a step of inserting an insert (2) having a hole into the hole produced.

6. Method according to one of the preceding claims, in which the heating of the part at the position of the hole to be produced is carried out during a forming step of the part (1), said forming step being independent of the perforation operation.

7. Method according to one of Claims 1 to 5, in which the heating of the part (1) at the position of the hole to be produced is carried out locally during the perforation operation by means for heating by radiation or by contact conduction or by ultrasound.

8. Perforation device for producing a hole in a part (1) formed substantially of fibres (10) held in a matrix (11), said part comprising, in the region of the hole to be produced, a first face, known as the upper face (12), through which the hole is produced, and a second face, known as the lower face (13), through which the hole emerges, said matrix consisting substantially of a material, known as a thermoplastic material, having a plastic state when it is brought to a temperature **Tf,** known as the forming temperature, and having a non-plastic state when it is at a temperature **Tu,** known as the use temperature, which is less than **Tf, characterized in that** it comprises a needle comprising:
- i) at a free end (315) of the needle (31), a tapering end (311) having a substantially constant cross section smaller than the cross section of the hole to be produced in the part (1) and having an end length **Le;**
- ii) at another end, a base (312) having a substantially constant cross section equal to the cross section of the hole to be produced and having a base length **Lt;**
- iii) between the tapering end (311) and the base (312), a region (313) having a changing cross section in which the cross section of the needle (31) changes progressively from the cross section of the tapering end towards the cross section of the base.

9. Perforation device according to Claim 8, in which the length of the base **Lt** is equal to or greater than a thickness of the part (1) at the position of the hole to be produced.

10. Perforation device according to Claim 8 or Claim 9, in which the needle (31) is secured, in the region of the base (312), to a body (32), said body forming a shoulder (322) with respect to said base, said shoulder forming a support surface against a peripheral region (14) of the hole when the needle is driven into the part (1) to form said hole.

11. Perforation device according to Claim 10, in which the body has a shape (323) intended to leave an indentation corresponding to the geometry of said shape in the part (1) at one or a number of edges of the hole or in the hole produced by said device.

12. Perforation device according to Claim 10 or Claim 11, in which the body (32) and the needle (31) are separable and joined together by way of a cylindrical extension (33) of said body or of said needle.

13. Perforation device according to Claim 12, in which the cylindrical extension (33) has an intermediate region (331) having a cross section smaller than the cross section of the base (312), said intermediate region being intended to receive an insert (2) to be fixed in the hole produced in the part (1) by the Perforation device, the cross section of said intermediate region corresponding to the shapes and dimensions of a hole in the insert (2), the shape and the dimensions of the cross section of said base corresponding to shapes and dimensions of an external cross section of said insert before said insert is positioned.

14. Perforation device according to Claim 12 or Claim 13, in which the body (32) and the needle (31) have, in the joined-together position, at least a first, spaced-apart position in which the insert (2) is not deformed, and a second, moved-together position, in which the insert (2) is deformed when said insert can be shaped plastically at the temperature Tf.

15. Device according to one of Claims 8 to 14, in which the needle (31) is connected to means for heating by radiation or by conduction or by ultrasound of a zone of the part (1) in which said device is to make a hole.
